# FASCICULE DE BREVET EUROPEEN

(11) **EP 0 714 241 B1**
(45) Date de publication et mention de la délivrance du brevet: **10.11.1999**
(21) Numéro de dépôt: 95923416.2
(22) Date de dépôt: 20.06.1995
(51) Int. Cl.: A23N 12/02

(54) **DISPOSITIF DE LAVAGE EN CONTINU DE PRODUITS, NOTAMMENT DE VEGETAUX**
EINRICHTUNG ZUM KONTINUIERLICHEN WASCHEN VON PRODUKTEN, INSBESONDERE PFLANZENGUT
DEVICE FOR CONTINUOUSLY WASHING PRODUCTS, ESPECIALLY PLANT PRODUCTS

(30) Priorité: 21.06.1994 FR 9407853
(43) Date de publication de la demande: 05.06.1996
(73) Titulaire: FREEZE AGRO INGENIERIE, F-29800 Pencran (FR)
(72) Inventeur: LE LEZ, Jean, F-29800 Pencran (FR)
(74) Mandataire: Le Faou, Daniel
(86) Numéro de dépôt international: FR9500815
(87) Numéro de publication internationale: WO9535040

(56) Documents cités:
- EP-A- 0 117 589
- CH-A- 553 546
- FR-A- 1 564 529
- FR-A- 2 541 091
- FR-A- 2 668 899
- US-A- 3 683 945

## Description

La présente invention concerne un dispositif pour laver des produits. Il peut être utilisé pour le lavage de produits ou articles variés, notamment pour des produits alimentaires tels que des végétaux, par exemple des légumes ou des herbes aromatiques.

Les dispositifs de lavage connus comportent généralement un transporteur sous forme de tapis sans fin grillagé, éventuellement pourvu de tasseaux, apte à déplacer les produits à l'intérieur d'une enceinte contenant de l'eau ou un autre produit de lavage. Des moyens de brassage mécanique et/ou pneumatique assurent un bouillonnement du bain qui favorise le lavage des produits au cours de leur transfert.

Un dispositif de ce genre est décrit par exemple dans les documents FR-A-2 541 091 et EP-A-0 117 589.

Ce genre de dispositif présente plusieurs inconvénients.

On observe souvent un encrassement rapide du tapis, et l'apparition à terme de nids bactériens dans les mailles et, le cas échéant, contre les tasseaux du tapis transporteur. Il se produit aussi inévitablement une infiltration de produits ou de particules (par exemple de pelures si on a affaire à des légumes) entre les deux brins du tapis. En outre, certains produits, ou certaines particules, qui restent adhérer aux mailles du tapis et/ou au tasseaux reviennent, transportés par le brin retour du tapis, dans l'enceinte de lavage. Ceci est particulièrement vrai lorsqu'on a affaire à des végétaux en feuilles ou à des produits de faibles dimensions.

Un autre inconvénient des dispositifs connus est lié au phénomène d'écrasement et de griffure des produits, en particulier s'ils sont fragiles, par suite de leur frottement contre le tapis transporteur ou contre les cylindres d'entraînement ou de renvoi du tapis, à l'intérieur de l'enceinte.

Il est très difficile, voire impossible de laver correctement et sans perte importante des produits en vrac de faible granulométrie ou des articles de très petites dimensions.

C'est le cas par exemple pour des tiges tubulaires de ciboulette, dont le diamètre est souvent inférieur à trois millimètres, qui sont coupées en tronçons de petite longueur.

Enfin, l'existence même d'un tapis mobile est source de panne et nécessite une maintenance coûteuse du dispositif.

L'objectif de l'invention est d'éviter ces différents inconvénients grâce à un dispositif ne nécessitant pas la présence de moyens mécaniques mobiles à l'intérieur de l'enceinte de lavage, le seul système mobile utilisé étant d'une conception simple et ne nécessitant qu'une maintenance très réduite, ce système étant disposé à la sortie de l'enceinte de lavage.

Le dispositif selon l'invention est conçu pour permettre de laver des produits de très petites dimensions tels que les tiges de ciboulette, ou des graines.

Les problèmes d'encrassement et de retour des produits dans l'enceinte de lavage sont par ailleurs également évités.

Ces résultats sont atteints conformément à la présente invention grâce au fait que le dispositif de lavage en continu de produits, notamment de végétaux, comprend :
**a)** une première enceinte contenant de l'eau, qui est destinée à recevoir les produits à laver, cette enceinte possédant un fond incliné qui débouche vers l'extérieur par son extrémité haute, dite extrémité aval ;
**b)** un tambour tamiseur rotatif, d'axe horizontal, tournant à vitesse constante et comportant une paroi cylindrique perforée ou grillagée dont les ouvertures sont plus petites que les produits à laver, ce tambour étant disposé à l'extérieur de ladite première enceinte de telle façon que les génératrices formant sa zone supérieure se placent tangentiellement dans le prolongement de ladite extrémité aval du fond de cette enceinte, et son sens de rotation étant tel que ces génératrices s'écartent de cette extrémité aval ;
**c)** une seconde enceinte placée en sortie de la première enceinte, et à la base du tambour tamiseur ;
**d)** un système d'alimentation continue en eau de la première enceinte de telle façon qu'elle déborde en permanence, l'eau en excès étant recueillie dans la seconde enceinte après avoir traversé le tambour tamiseur ;
**e)** un diffuseur d'eau qui est alimenté en eau par ledit système d'alimentation et est situé à l'extrémité amont de la première enceinte, ce diffuseur produisant des jets d'eau sensiblement horizontaux dirigés vers l'aval de l'enceinte, adaptés pour déplacer progressivement les produits à laver de la zone amont de l'enceinte, où ils sont déversés, vers l'extrémité aval, et les en faire sortir en même temps que l'eau débordante, de sorte qu'ils se déposent sur la paroi du tambour tamiseur ;
**f)** des rampes d'insufflation d'air qui sont situées à l'intérieur de la première enceinte et sont adaptées pour produire dans l'eau de cette première enceinte une multitude de jets d'air dirigés vers le haut afin de réaliser un brassage des produits transportés par le courant d'eau généré par le diffuseur ;
**g)** des moyens d'enlèvement et de récupération des produits, après qu'ils aient été transportés par le tambour sur une fraction de tour ;
   et qu'aucun transporteur mécanique, ni partie de transporteur mécanique n'est présent à l'intérieur de ladite première enceinte, le déplacement des produits et leur sortie hors de cette enceinte étant assurés uniquement par le courant d'eau débordant généré par le diffuseur.

Par le terme "eau", on entend l'eau proprement dite mais également toute solution aqueuse de produits, de lavage, désinfectant et/ou bactéricide.

Par ailleurs, selon un certain nombre de caractéristiques avantageuses et non limitatives :
- le système d'alimentation en eau fonctionne en circuit fermé, l'eau fournie à la première enceinte étant récupérée dans la seconde, éventuellement après chauffage ou refroidissement ;
- le dispositif comporte des rampes additionnelles de diffusion d'eau dans la première enceinte, qui produisent des jets participant à la génération du courant d'eau, d'amont en aval, dans cette première enceinte ;
- le dispositif comporte dans la partie amont de la première enceinte une grille horizontale, distante du fond, au dessus de laquelle sont brassés les produits ;
- cette grille possède des volets articulés ;
- le tambour tamiseur est supporté et guidé en rotation à l'une de ses extrémités par des galets périphériques ;
- l'extrémité haute du fond de la première enceinte consiste en un rebord horizontal rabattu pour venir à fleur de la paroi du tambour tamiseur ;
- lesdits moyens d'enlèvement des produits du tambour comprennent une rampe de diffusion d'un fluide positionnée à l'intérieur du tambour, et générant des jets aptes à chasser vers l'extérieur les produits transportés par celui-ci ;
- lesdits moyens d'enlèvement comprennent une raclette apte à décoller les produits du tambour ;
- il est prévu au fond de chacune des enceintes des ouvertures permettant l'enlèvement des déchets et la vidange ;
- le dispositif comporte des brosses rotatives disposées en zone aval de la première enceinte ;
- le dispositif comporte un système à peigne et tourniquet adapté pour recueillir les déchets flottants dans la première enceinte ;
- le dispositif comporte une grille filtrante montée à l'intérieur du tambour rotatif.

L'invention concerne également une installation de lavage et/ou de désinfection de produits. Cette installation comporte plusieurs dispositifs tels que mentionnés ci-dessus, disposés en cascade de telle manière que les produits lavés quittant le tambour tamiseur de l'un des dispositifs tombent dans la première enceinte du dispositif suivant, ceux quittant le tambour du dernier dispositif tombant sur un dispositif récepteur et/ou évacuateur.

D'autres caractéristiques et avantages de l'invention apparaîtront de la description et des dessins annexés qui en représentent un mode de réalisation préférentiel.

Sur ces dessins :
- la figure 1 est une vue de face du dispositif ;
- les figures 2 et 3 sont respectivement une vue de côté non coupée et une vue de côté selon la coupe transversale III-III de la figure 1 de ce même dispositif ;
- la figure 4 est une vue schématique en coupe longitudinale de ce dispositif, cette vue étant destinée à en illustrer le fonctionnement au cours d'une opération de lavage de produits ;
- la figure 5 est une vue schématique en coupe d'une installation comportant trois dispositifs conformes à l'invention, disposés les uns à la suite des autres ;
- la figure 6 est une vue schématique similaire à la figure 4, qui représente une variante du dispositif.

Le dispositif représenté sur les figures comprend un bâti 1 monté sur des pieds 23 d'appui au sol qui sont réglables en hauteur, ce qui permet de régler convenablement l'horizontalité du dispositif.

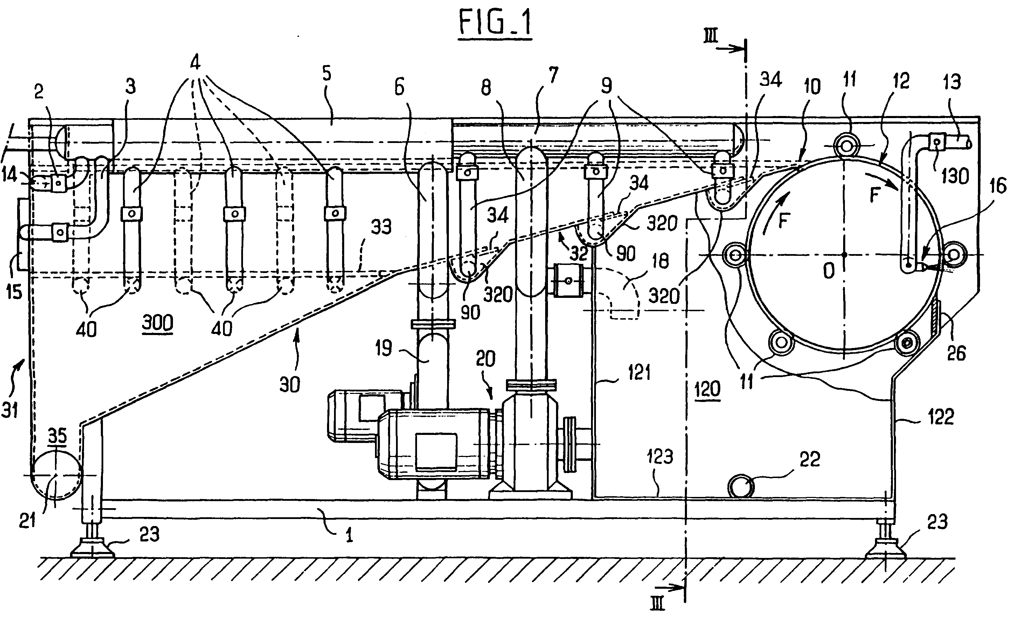

Ce bâti 1 supporte deux cuves ou enceintes 300 et 120, qui sont ouvertes vers le haut. Ce sont des caissons dont les parois latérales n'ont pas été symbolisées sur les figures. La première enceinte 300 possède une paroi frontale 31, située à la gauche de la figure 1, qui sera désignée plus loin par paroi arrière.

L'enceinte 300 possède un fond en deux parties 30, 32 qui forment des plans inclinés. Ils ont une direction ascendante lorsqu'on s'éloigne de la paroi arrière 31. La partie de fond 30 la plus en arrière est plus inclinée par rapport à l'horizontale que la partie suivante 32, située plus en avant. A titre indicatif, l'angle que forme le plan incliné 30 avec l'horizontale est de l'ordre de 25°, tandis que l'angle que forme le plan incliné 32 avec l'horizontale est de l'ordre de 15°.

A l'intérieur de l'enceinte 300, au-dessus de la partie de fond 30, est montée une grille horizontale 33, dont les mailles ou autres ouvertures (par exemple des perforations) ont en principe une section de passage un peu plus petite que les dimensions transversales des produits à traiter, en particulier lorsqu'il s'agit de produits lourds ayant tendance à décanter. Lorsque les produits flottent, ce qui est le cas de la ciboulette, les ouvertures peuvent être plus grandes que les dimensions des produits à traiter.

A la base de la paroi arrière 31 se trouve un petit réceptacle 35 dans lequel le plan incliné 30 se raccorde à sa partie basse. Ce réceptacle est destiné à recueillir les déchets, particules et salissures résultant du lavage des produits, et qui ont traversé la grille 3. Il est prévu à ce niveau une ouverture ou un conduit 21 d'évacuation de ces déchets, permettant la vidange de l'enceinte 300. Ce produit peut être équipé d'une vanne automatique qui s'ouvre périodiquement et permet ainsi de débarrasser régulièrement l'enceinte 300 des déchets et salissures.

La seconde cuve ou enceinte 120 est disposée à l'extrémité avant de la première enceinte 300, et s'étend partiellement sous l'extrémité avant - ou aval - de la paroi de fond 32. On a désigné par les références 121, 122 et 123 respectivement les parois frontales arrière, avant, ainsi que la paroi de fond (horizontale) de la seconde enceinte 120. Cette paroi de fond est également munie d'une ouverture de vidange 22.

Dans la partie haute de cette enceinte, est disposé un tambour cylindrique 12, d'axe horizontal **O**, qui possède une paroi perforée ou grillagée dont les mailles ou les ouvertures ont une section de passage inférieure aux plus petites dimensions des produits à traiter. Il s'agit en effet d'un tambour tamiseur destiné à autoriser le passage de l'eau, ou autres liquides de lavage, mais à empêcher le passage des produits.

A titre d'exemple, si on a affaire à des morceaux de ciboulette de 3 millimètres de longueur et que la paroi du tambour est garnie d'ouvertures circulaires, leur diamètre sera de l'ordre de 2,5 millimètres.

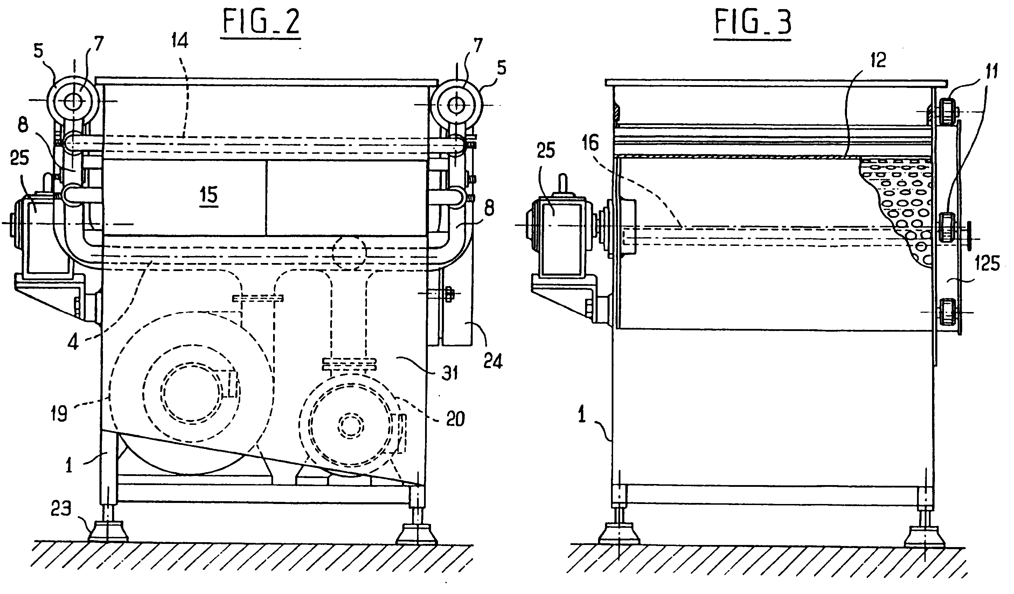

Le tambour tamiseur 12 est entraîné en rotation à vitesse continue et constante par un motoréducteur électrique 25, dont la vitesse est de préférence réglable, ce moteur étant fixé sur une console solidaire du bâti 1 (voir figures 2 et 3).

L'arbre de sortie du moteur est accouplé à un flasque fixé à une extrémité du tambour (situé sur la gauche de la figure 3). De l'autre côté (c'est-à-dire à droite de la figure 3) le tambour est solidaire d'une virole 125 qui est guidée en rotation par un jeu de galets périphériques 11, par exemple au nombre de cinq, régulièrement répartis angulairement.

Selon une caractéristique importante de l'invention, la partie haute du tambour vient à fleur de l'extrémité aval de la partie de fond 32 de l'enceinte 300, le plan de cette partie 32 étant sensiblement tangent au tambour.

L'extrémité haute 10 du plan incliné 32 consiste en un rebord rabattu vers le tambour, dont le bord extérieur, également horizontal, se trouve juste à proximité d'une génératrice du tambour. Ceci permet le transfert correct, sans solution de continuité, des produits sortant de l'enceinte sur la paroi du tambour.

Le sens **F** de rotation du tambour est tel que ses génératrices s'écartent de l'extrémité aval 10 de l'enceinte 300.

Le dispositif est pourvu d'une rampe 16 alimentée en eau sous pression par un conduit d'amenée 13. Une vanne 130 permet de contrôler ce débit d'eau. La rampe 16 est située à l'intérieur du tambour et en vis-à-vis de la partie descendante de celui-ci. Elle possède un certain nombre de buses régulièrement espacées sur toute la longueur du tambour (transversalement par rapport au plan de la figure 1), ces buses produisant des jets d'eau sensiblement horizontaux qui traversent la paroi ajourée du tambour 12 de l'intérieur vers l'extérieur, afin de chasser vers l'extérieur les produits transportés par le tambour et qui risqueraient de rester adhérer dans les mailles ou autres ouvertures de la paroi de tamisage.

Dans une variante de réalisation, la rampe 16 peut être alimentée en air sous pression.

La référence 24 de la figure 2 se rapporte à un portillon permettant d'accéder au tambour 12 pour la maintenance et le nettoyage de celui-ci.

Le dispositif est également équipé d'un système d'enlèvement mécanique, qui est constitué par une raclette 26. Il s'agit d'une lame disposée à l'extérieur du tambour, parallèlement aux génératrices, et venant racler la paroi du tambour pour décoller, à la sortie de la rampe 16 les produits susceptibles d'adhérer encore à la paroi.

Les produits ainsi décollés tombent par gravité dans un dispositif de réception 100, par exemple sur un transporteur mobile qui achemine les produits lavés vers des stations de traitement subséquentes tel qu'un poste de séchage, un poste de conditionnement, de surgélation, ou un autre dispositif de lavage.

Les deux enceintes 300 et 120 contiennent de l'eau ou un autre produit de lavage approprié, par exemple de l'eau contenant des substances lavantes et/ou désinfectantes.

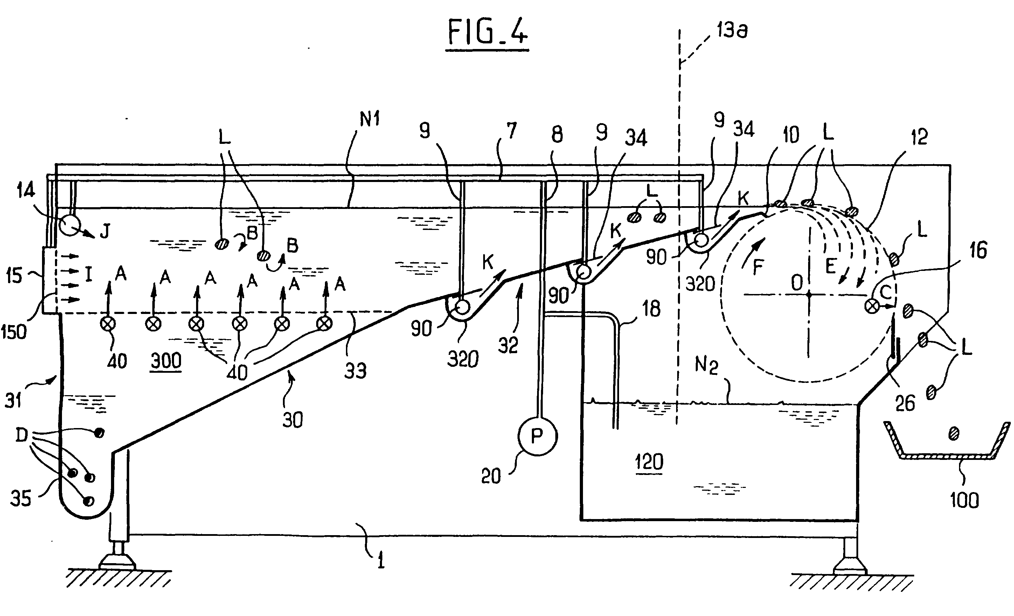

Ce dispositif est équipé d'un système d'approvisionnement en continu de l'enceinte 300 en liquide, ce système fonctionnant de telle manière que le liquide déborde en permanence de l'enceinte pour en sortir sous forme d'un flux régulier par l'extrémité aval du plan incliné 32, c'est-à-dire au-dessus du rebord 10. A la figure 4, on a désigné par **N**_{**1**} le niveau de liquide contenu dans l'enceinte 300, niveau qui se trouve donc toujours plus haut que ce rebord 10.

On a désigné par **N**_{**2**} le niveau de liquide contenu dans l'enceinte 120.

Ce système d'approvisionnement en eau de l'enceinte 300 fonctionne en circuit fermé. Pour cela, il est prévu une pompe 20, à gros débit et faible pression (de l'ordre de 1 à 2 bars) apte à refouler de l'eau prélevée dans l'enceinte 120 par une conduite 8. Cette conduite 8 comporte une ramification dite conduite by-pass 18 plongeant en-dessous du niveau **N**_{**2**}. Cette dernière est équipée d'une vanne de réglage qui peut être avantageusement asservie à un pressostat monté sur le conduit de refoulement 8 de la pompe à eau. Ce conduit 8 consiste en fait en une paire de tubulures qui s'étendent verticalement de chaque côté du dispositif pour se raccorder à des collecteurs cylindriques de distribution d'eau 7 disposés horizontalement, latéralement en partie haute de l'enceinte, de chaque côté de la cuve. Ces collecteurs de distribution fournissent de l'eau à des rampes 14, 90 et à un diffuseur 15.

La rampe 14 est située en partie haute de la paroi 31. Elle est approvisionnée en eau par l'intermédiaire de deux vannes réglables 2. Son rôle est surtout de fournir de l'eau dans l'enceinte, afin de compenser les pertes d'eau par débordement. Cette arrivée d'eau est symbolisée par la flèche **J** à la figure 4.

Le diffuseur 15, situé à l'arrière de la face 31, possède une paroi perforée 150 tournée vers l'intérieur de l'enceinte. Il produit des jets d'eau sensiblement horizontaux, passant au-dessus de la grille 33, et dirigés vers l'aval de l'enceinte, comme symbolisé par les flèches **I** à la figure 4.

Les rampes de diffusion 90 sont alimentées via des conduits 9. Elles sont disposées horizontalement dans des renfoncements ou poches 320 formées dans le fond incliné 32. Ces rampes produisent des jets d'eau obliques **K** (voir figure 4) servant à déplacer les produits d'amont vers l'aval sur le plan incliné 32. Ces jets forment ainsi un lit hydraulique transportant les produits sans contact ni frottement matériel avec des éléments mécaniques.

Des volets 34 permettent de régler l'orientation et/ou le débit des jets d'eau diffusés par ces rampes 90.

L'arrivée d'eau dans l'enceinte 300 au moyen de ces différentes rampes 14, 90 et au moyen du diffuseur 15 est déterminée de telle façon que le flux d'écoulement qui déborde de l'enceinte par le rebord 10 soit compatible avec la vitesse de rotation du tambour tamiseur, de telle manière que les produits quittant l'enceinte et se déposant sur la paroi du tambour se répartissent sur celle-ci avec une densité suffisante, mais non excessive.

Pour compenser les pertes, l'appoint d'eau peut se faire soit par une conduite 13a, symbolisée par un trait mixte à la figure 4, soit par la rampe 16 dans le cas où plusieurs dispositifs de lavage de ce type sont mis bout-à-bout.

Il est possible d'asservir la pompe 20 aux conditions de niveau **N**_{**1**} et **N**_{**2**} pour que ces niveaux soient toujours corrects, un déclenchement automatique de l'appoint étant réalisé au besoin.

Le dispositif comporte également une turbine de soufflage d'air 19 qui, comme la pompe 20 est montée à l'intérieur du bâti sous le fond incliné 30, 32 de l'enceinte 300. La turbine 19 alimente, via des tubulures de refoulement 6, des caissons collecteurs de distribution d'air pulsé 5. Il est prévu deux caissons cylindriques annulaires, coaxiaux aux collecteurs d'eau 7, et entourant ces derniers (afin de réduire l'encombrement de l'ensemble).

Les collecteurs 5 fournissent de l'air comprimé via des tubulures de distribution 4 à des rampes 40 d'insufflation d'air dans le bain. Dans le mode de réalisation représenté, il est prévu six rampes orientables 40 disposées horizontalement sous la grille 33, et réparties correctement le long de cette grille. Elles produisent une multitude de jets d'air symbolisés par les flèches **A** à la figure 4, dirigés vers le haut, dont le rôle est de faire bouillonner le bain au-dessus de la grille, réalisant un brassage des produits, brassage symbolisé par les flèches **B**.

Les jets **A** ne sont pas nécessairement verticaux. En réglant l'orientation des rampes 40 on peut modifier l'inclinaison des jets pour l'adapter au produit à laver.

En référence à la figure 4, nous allons maintenant décrire une opération de lavage de produits **L**, par exemple de tiges de ciboulette.

Le dispositif est alimenté en continu en produits à laver, par exemple au moyen d'un tapis mobile qui les amène au-dessus de l'enceinte 300, à l'aplomb de la zone amont de l'enceinte, et les y déverse par gravité.

Bien entendu, le débit d'alimentation en produits doit être compatible avec la vitesse de lavage.

A l'intérieur de l'enceinte 300, les produits sont chassés d'amont en aval sous l'effet du courant d'eau **I** produit par le diffuseur 15. Dans le même temps ils sont brassés pneumatiquement par les jets d'air **A**, ce qui réalise leur lavage. Les déchets, souillures et particules diverses **D** résultant de ce lavage traversent la grille 33 et retombent au fond de l'enceinte, dans le réceptacle 35. Les produits continuent leur progression dans l'enceinte, au-dessus de la partie inclinée 32, leur déplacement étant tel que les produits **L** sortent ensuite de l'enceinte, en même temps que l'eau débordante et franchissent le rebord aval 10. Ils sont alors pris en charge par la paroi en mouvement du tambour rotatif 12, sur une fraction de tour (sur un angle de l'ordre de 100 à 120°).

Au cours de ce transfert, l'eau retombe librement en traversant la paroi du tambour puis l'espace intérieur au tambour, comme symbolisé par les flèches **E**, à l'intérieur de l'enceinte 120. Les produits **L**, qui eux ne peuvent pas traverser la paroi du tambour 12 retombent à l'extérieur de l'enceinte 120, sur le transporteur 100. Ils retombent en principe par gravité, lorsque leur trajectoire devient descendante. A défaut, leur enlèvement est facilité par les moyens hydrauliques ou pneumatiques 16 et mécaniques 26, si bien que l'ensemble des produits supportés par le tambour retombe sur le transporteur 100.

Grâce à ce dispositif, il est exclu que des produits retournent dans l'enceinte de lavage 300, contrairement à ce qui se passe avec des dispositifs traditionnels à tapis mobile ou des produits non enlevés à la sortie de l'enceinte de lavage risquent d'être ramenés dans celle-ci par le brin retour du tapis.

Il est possible de prévoir une évacuation périodique, par exemple automatisée des déchets **D** par l'orifice de vidange 21.

Un nettoyage périodique des deux cuves peut être facilement réalisé, l'ouverture 22 permettant la purge de l'enceinte 120.

Il va de soi qu'on adaptera les caractéristiques dimensionnelles et autres d'un tel dispositif à la nature et aux dimensions des produits à laver, ainsi qu'au débit de traitement souhaité.

A titre indicatif, une telle machine aura une longueur de l'ordre de 3,50 mètres, une hauteur de l'ordre de 1,70 mètre et une largeur de l'ordre de 1,20 mètre.

Le tambour tamiseur aura un diamètre de l'ordre de 0,75 mètre.

A titre indicatif, les capacités respectives des enceintes 300 et 120 sont de l'ordre de 1 000 à 2 000 litres et 750 à 1 500 litres.

Le débit de l'eau qui déborde en permanence de la première enceinte 300 est de l'ordre de 100 à 250 m³/h.

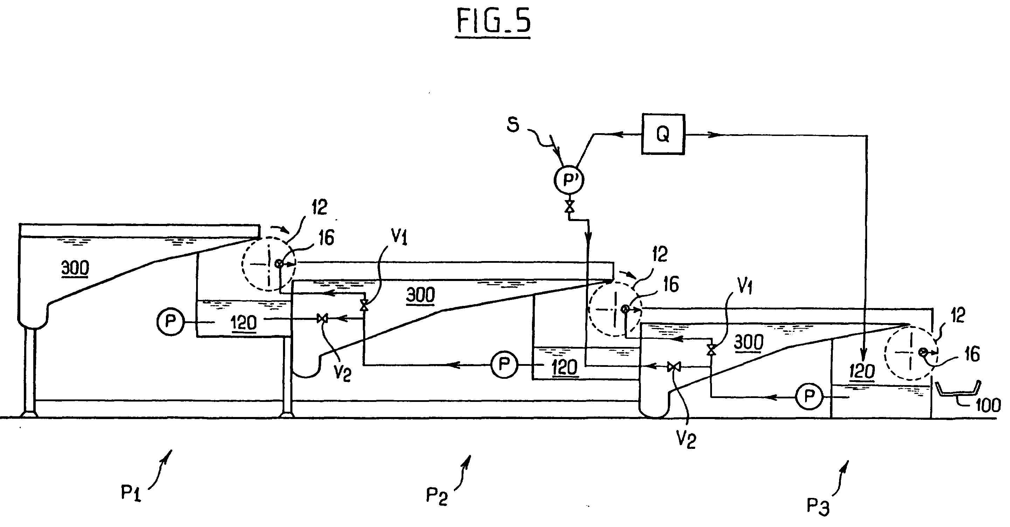

A la figure 5 est représentée une installation comportant trois dispositifs **P**_{**1**}, **P**_{**2**} et **P**_{**3**} conformes à l'invention, disposés les uns à la suite des autres, c'est-à-dire de telle façon que les produits transférés par le tambour 12 du dispositif **P**_{**1**} tombent dans l'enceinte 300 du dispositif **P**_{**2**}, et ainsi de suite.

Ces dispositifs **P**_{**1**}, **P**_{**2**} et **P**_{**3**} font respectivement office de postes de prélavage, lavage / débactérisation et de rinçage.

On notera que les pompes **P** qui équipent les dispositifs **P**_{**2**}, **P**_{**3**} permettent respectivement d'alimenter en eau d'une part les rampes 16 et d'autre part les enceintes 120 des dispositifs **P**_{**1**} et **P**_{**2**}. Des vannes **V**_{**1**} et **V**_{**2**} permettent de régler le débitd'eau.

L'installation comporte une pompe supplémentaire doseuse **P'** qui permet d'introduire dans l'enceinte 120 du dispositif **P**_{**2**} un mélange de produits bactéricides **S**, tel que du chlore, de l'acide citrique ou acétique et d'eau fournie par une source d'alimentation **Q**. Cette source alimente également directement!`enceinte 120 du dispositif **P**_{**3**}.

La rampe 16 qui équipe le dispositif **P**_{**3**} est de préférence alimentée en air sous pression.

Les produits à traiter déversés dans l'enceinte 300 du dispositif **P**_{**1**} subissent d'abord un prélavage puis sont transférés dans le dispositif **P**_{**2**} où ils subissent un lavage et une débactérisation. Leur transfert dans le dispositif **P**_{**3**} permet de les rincer, avant de les récupérer dans le transporteur 100.

De préférence, le dispositif **P**_{**2**} aura une longueur supérieure à celle des dispositifs **P**_{**1**} et **P**_{**3**}, de manière à mener à bien l'action bactéricide du produit **S** ajouté à l'eau (qui nécessite une certaine durée).

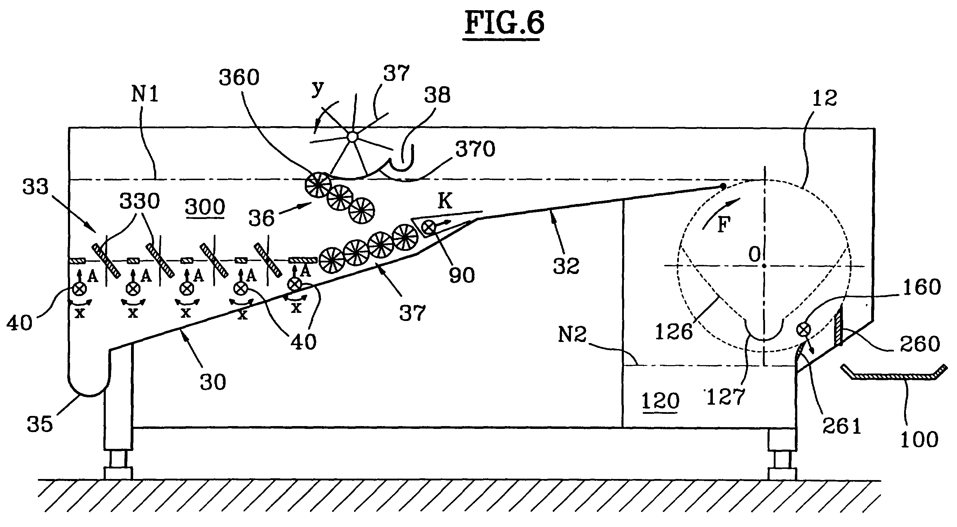

Sur le mode de réalisation illustré à la figure 6 plusieurs perfectionnements ont été apportés au dispositif. Les références utilisées pour désigner des éléments identiques ou similaires à ceux de la figure 4 sont les mêmes que celles utilisées sur cette figure.

Les modifications apportées sur ce mode de réalisation sont les suivantes :
- Les rampes 40 sont montées oscillantes autour d'un axe horizontal transversal (flèches **x**), ce qui favorise le brassage dans l'enceinte 300.
- La grille 33 possède des volets 330 articulés. Ainsi, lorsque ces volets sont ouverts, dans l'état représenté sur la figure, il est possible d'éliminer les pierres, ou autres articles indésirables de densité élevée ; leur ouverture peut se faire cylindriquement, et automatiquement.
- A la sortie de cette grille 33 sont disposés deux jeux de brosses rotatives 36, 37 entre lesquels passent les produits. De préférence le jeu supérieur 36 est articulé autour d'un axe 360 (qui peut être l'axe de la brosse amont). L'ensemble forme un espace convergent dans lequel les produits subissent un nettoyage supplémentaire, utile notamment pour des produits tels que les carottes, céleris, navets et pommes-de-terre qui possèdent des aspérités et des parties en creux.

De préférence l'ensemble est réglable en hauteur.

Dans une variante, seul le jeu de brosses supérieur 36 est prévu. Le jeu inférieur est facultatif.
- Au-dessus des brosses 36 est monté un tourniquet rotatif (flèche **y**) associé à un peigne 370 se trouvant au niveau **N**_{**1**}. leur rôle est de ramasser les déchets flottants pour les évacuer dans une goulotte 38.
- A l'intérieur du tambour tamiseur 12 est montée une grille filtrante fixe 126, en forme générale de "V", dont le fond forme une goulotte 127. Ses mailles sont plus petites que celles du tambour. Son rôle est de récupérer les produits hors calibre ou parasites ayant traversé le tambour tamiseur, sans contrarier le passage de l'eau vers la cuve 120. Ces produits indésirables sont évacués en bout de goulotte 127.
- Il est prévu un système d'extraction et de séparation des produits du tambour, qui comprend tout d'abord une lame d'extraction 260 apte à écarter le produit transporté par le tambour 12, mais non à décoller les particules y adhérant. Celles-ci sont décollées plus en aval au moyen d'une soufflette d'air comprimé 160 à laquelle, pour une meilleures sûreté de fonctionnement, est associé un racloir 261. Cet agencement est utile pour éliminer des salissures, peaux ou écailles susceptibles de se coller sur le tambour. Un réceptacle approprié (non représenté) est prévu pour les recueillir.

Il est possible de faire passer l'eau recyclée lorsqu'elle retourne de l'enceinte 120 à l'enceinte 300 à travers un échangeur de chaleur apte à la réchauffer ou, au contraire, à la refroidir. Cet équipement additionnel est utile notamment lorsqu'on a affaire à des produits alimentaires que l'on doit décongeler ou blanchir, cette opération pouvant se faire en cours de lavage par de l'eau chaude ; il peut être utile aussi pour refroidir en cours de lavage des produits venant d'être blanchis et devant être congelés après lavage.

Dans une variante de la grille 33, un ou plusieurs volets articulés ne sont prévus que dans la zone d'entrée, en partie amont de la grille, là où les articles lourds et indésirables ont tendance à se déposer prioritairement. Le reste (zones centrale et aval) de la grille est dépourvu de volets pivotants.

De préférence, le tambour 12 est facilement démontable et interchangeable, de sorte qu'il peut être adapté à la granulométrie du produit et des déchets.

## Revendications

1. Dispositif de lavage en continu de produits, notamment de végétaux, caractérisé parle fait qu'il comprend :
**a)** une première enceinte (300) contenant de l'eau, qui est destinée à recevoir les produits (L) à laver, cette enceinte (300) possédant un fond incliné (30, 32) qui débouche vers l'extérieur par son extrémité haute (10), dite extrémité aval ;
**b)** un tambour tamiseur rotatif (12), d'axe horizontal (O), tournant à vitesse constante et comportant une paroi cylindrique perforée ou grillagée dont les ouvertures sont plus petites que les produits (L) à laver, ce tambour (12) étant disposé à l'extérieur de ladite première enceinte (300) de telle façon que les génératrices formant sa zone supérieure se placent tangentiellement dans le prolongement de ladite extrémité aval (10) du fond de cette enceinte (300), et son sens de rotation (F) étant tel que ces génératrices s'écartent de cette extrémité aval (10) ;
**c)** une seconde enceinte (120) placée en sortie de la première enceinte (300), et à la base du tambour tamiseur (12) ;
**d)** un système (20, 18, 8, 7) d'alimentation continue en eau de la première enceinte (300) de telle façon qu'elle déborde en permanence, l'eau (E) en excès étant recueillie dans la seconde enceinte (120) après avoir traversé le tambour tamiseur (12) ;
**e)** un diffuseur d'eau (15) qui est alimenté en eau par ledit système d'alimentation (20, 18, 8, 7) et est situé à l'extrémité amont de la première enceinte (300), ce diffuseur (15) produisant des jets d'eau (I) sensiblement horizontaux dirigés vers l'aval de l'enceinte, adaptés pour déplacer progressivement les produits à laver (L) de la zone amont de l'enceinte, où ils sont déversés, vers l'extrémité aval (10), et les en faire sortir en même temps que l'eau débordante, de sorte qu'ils se déposent sur la paroi du tambour tamiseur (12) ;
**f)** des rampes (40) d'insufflation d'air qui sont situées à l'intérieur de la première enceinte (300) et sont adaptées pour produire dans l'eau de cette première enceinte une multitude de jets d'air (A) dirigés vers le haut afin de réaliser un brassage des produits (L) transportés par le courant d'eau généré par le diffuseur (15) ;
**g)** des moyens d'enlèvement (16, 26, 160, 260-261) et de récupération (100) des produits (L), après qu'ils aient été transportés par le tambour (12) sur une fraction de tour ;
et qu'aucun transporteur mécanique, ni partie de transporteur mécanique, n'est présent à l'intérieur de ladite première enceinte (300), le déplacement des produits (L) et leur sortie hors de cette enceinte étant assurés uniquement par le courant d'eau débordant généré par le diffuseur (15).

2. Dispositif selon la revendication 1, caractérisé par le fait que le système d'alimentation en eau (20, 18, 8, 14) fonctionne en circuit fermé, l'eau fournie à la première enceinte (300) étant récupérée dans la seconde (120), éventuellement après chauffage ou refroidissement.

3. Dispositif selon l'une des revendications 1 ou 2, caractérisé par le fait qu'il comporte des rampes additionnelle (90) de diffusion d'eau dans la première enceinte, qui produisent des jets (K) participant à la génération du courant d'eau, d'amont en aval, dans cette première enceinte (300).

4. Dispositif selon l'une des revendications 1 à 3, caractérisé par le fait qu'il comporte dans la partie amont de la première enceinte (300) une grille horizontale (33), distante du fond (30), au dessus de laquelle sont brassés les produits (L).

5. Dispositif selon la revendication 4, caractérisé par le fait que ladite grille (33) possède des volets articulés (330).

6. Dispositif selon l'une des revendications 1 à 5, caractérisé par le fait que le tambour tamiseur (12) est supporté et guidé en rotation à l'une de ses extrémités par des galets périphériques (11).

7. Dispositif selon l'une des revendications 1 à 6, caractérisé par le fait que l'extrémité haute (10) du fond (32) de la première enceinte consiste en un rebord horizontal rabattu pour venir à fleur de la paroi du tambour tamiseur (12).

8. Dispositif selon l'une des revendications 1 à 7, caractérisé par le fait que lesdits moyens d'enlèvement des produits du tambour (12) comprennent une rampe (16) de diffusion d'un fluide positionnée à l'intérieur du tambour (12), et générant des jets aptes à chasser vers l'extérieur les produits (L) transportés par celui-ci.

9. Dispositif selon l'une des revendications 1 à 8, caractérisé par le fait que lesdits moyens d'enlèvement comprennent une raclette (26, 260) apte à décoller les produits (L) du tambour (12).

10. Dispositif selon l'une des revendications 1 à 9, caractérisé par le fait qu'il est prévu au fond de chacune des enceintes (300, 120) des ouvertures (21, 22) permettant l'enlèvement des déchets (D) et la vidange.

11. Dispositif selon l'une des revendications 1 à 10, caractérisé par le fait qu'il comporte des brosses rotatives (36, 37) disposées en zone aval de la première enceinte (300).

12. Dispositif selon l'une des revendications 1 à 11, caractérisé par le fait qu'il comporte un système à peigne (370) et tourniquet (37) adapté pour recueillir les déchets flottants dans la première enceinte (300).

13. Dispositif selon l'une des revendications 1 à 12, caractérisé par le fait qu'il comporte une grille filtrante (126) montée à l'intérieur du tambour rotatif (12).

14. Installation de lavage et/ou de désinfection de produits, qui comporte plusieurs dispositifs conformes à l'une des revendications précédentes et disposés en cascade de telle manière que les produits lavés quittant le tambour tamiseur (12) de l'un des dispositifs (P₁, P₂) tombent dans la première enceinte (300) du dispositif suivant (P₂, P₃), ceux quittant le tambour (12) du dernier dispositif (P₃) tombant sur un dispositif récepteur et/ou évacuateur (100).

## Claims

1. Apparatus for continuously washing articles, in particular plant produce, the apparatus being characterized by the fact that it comprises:
a) a first enclosure (300) containing water that is designed to receive the articles (L) to be washed, said enclosure (300) having a sloping bottom (30, 32) which opens to the outside via its top end (10) referred to as its "downstream" end;
b) a rotary screening drum (12), having a horizontal axis (O), rotating at constant speed, and having a perforated or gridded cylindrical wall in which the openings are smaller than the articles (L) to be washed, said drum (12) being disposed outside said first enclosure (300) so that the generator lines forming the top zone of the drum are tangential to and in line with said downstream end (10) of the bottom of said enclosure (300), and the direction of rotation (F) of the drum being such that said generator lines move away from said downstream end (10);
c) a second enclosure (120) placed at the outlet of the first enclosure (300) and at the base of the screening drum (12);
d) a feed system (20, 18, 8, 7) for continuously feeding the first enclosure (300) with water in such a manner that it continuously overflows, the excess water (E) being collected in the second enclosure (120) after passing through the screening drum (12);
e) a water diffuser (15) which is fed with water by said feed system (20, 18, 8, 7) and which is situated at the upstream end of the first enclosure (300), said diffuser (15) producing substantially horizontal jets of water (I) that are directed towards the downstream end of the enclosure, being adapted to move the articles that are to be washed (12) progressively from the upstream zone of the enclosure into which they are discharged towards the downstream end (10), and to cause them to escape together with the overflowing water so that they are deposited on the wall of the screening drum (12);
f) air delivery strips (40) which are situated inside the first enclosure (300) and which are adapted to produce a multitude of upwardly directed air jets (A) within the water of said first enclosure so as to stir the articles (L) being transported by the flow of water generated by the diffuser (15);
g) removal and recovery means (16, 26, 160, 260-261; 100) for removing and recovering the articles (L) after they have been carried by the drum (12) through a fraction of a turn; and
no mechanical conveyor or any portion of a mechanical conveyor is present within said first enclosure (300), the articles (L) being moved within and discharged from said enclosure solely by the flow of overflowing water generated by the diffuser (15).

2. Apparatus according to claim 1, characterized by the fact that the water feed system (20, 18, 8, 14) operates in a closed circuit, the water delivered to the first enclosure (300) being recovered from the second enclosure (120), optionally after being heated or cooled.

3. Apparatus according to claim 1 or 2, characterized by the fact that it includes additional strips (90) for delivering water into the first enclosure, which strips produce jets (K) that contribute to generating the upstream to downstream flow of water in said first enclosure (300).

4. Apparatus according to any one of claims 1 to 3, characterized by the fact that it includes a horizontal grid (33) in the upstream portion of the first enclosure (300) at a distance from the bottom (30), and above which the articles (L) are stirred.

5. Apparatus according to claim 4, characterized by the fact that said grid (33) has hinged flaps (330).

6. Apparatus according to any one of claims 1 to 5, characterized by the fact that the screening drum (12) is supported and guided in rotation at one of its ends by peripheral wheels (11).

7. Apparatus according to any one of claims 1 to 6, characterized by the fact that the top end (10) of the bottom (32) of the first enclosure consists in a horizontally folded rim so as to come flush with the wall of the screening drum (12).

8. Apparatus according to any one of claims 1 to 7, characterized by the fact that said means for removing articles from the drum (12) comprise a strip (16) for diffusing a fluid, which strip is positioned inside the drum (12), and generating jets suitable for outwardly expelling the articles (L) that are transported by the drum.

9. Apparatus according to any one of claims 1 to 8, characterized by the fact that said removal means comprise a scraper (26, 260) suitable for separating the articles (L) from the drum (12).

10. Apparatus according to any one of claims 1 to 9, characterized by the fact that openings (21, 22) are provided in the bottom of each of the enclosures (300, 120) enabling waste (D) to be removed and enabling them to be emptied.

11. Apparatus according to any one of claims 1 to 10, characterized by the fact that it includes rotary brushes (36, 37) disposed in the downstream zone of the first enclosure (300).

12. Apparatus according to any one of claims 1 to 11, characterized by the fact that it includes a comb and toothed reel system (370, 37) adapted to collect waste floating in the first enclosure (300).

13. Apparatus according to any one of claims 1 to 12, characterized by the fact that it includes a filtering grid (126) mounted inside the rotary drum (12).

14. An installation for washing and/or disinfecting articles, the installation comprising a plurality of apparatuses according to any preceding claim and disposed in cascade in such a manner that the washed articles leaving the screening drum (12) of one of the apparatus (P₁, P₂) drop into the first enclosure (300) of the following apparatus (P₂, P₃), with those leaving the drum (12) of the last apparatus (P₃) dropping onto receiver and/or removal apparatus (100).

## Patentansprüche

1. Vorrichtung zum kontinuierlichen Waschen von Produkten, insbesondere Pflanzengut, dadurch gekennzeichnet, daß sie umfaßt:
**a)** einen ersten, Wasser enthaltenden Behälter (300), welcher dafür bestimmt ist, die zu waschenden Produkte (L) aufzunehmen, wobei dieser Behälter einen schrägen Boden (30, 32) besitzt, welcher mit seinem oberen Ende (10), dem sogenannten stromabwärts gerichteten Ende, nach außen mündet;
**b)** eine drehende Siebtrommel (12) mit horizontaler Achse (O), welche mit konstanter Geschwindigkeit dreht und eine perforierte oder vergitterte zylindrische Wand aufweist, deren Öffnungen kleiner sind als die zu waschenden Produkte (L), wobei diese Trommel außerhalb des ersten Behälters (300) derart angeordnet ist, daß sich die ihren oberen Bereich bildenden Generatoren tangential in der Verlängerung des stromabwärts gerichteten Endes (10) des Bodens dieses Behälters (300) anordnen, und ihr Drehsinn (F) derart ist, daß sich diese Generatoren von diesem stromabwärts gerichteten Ende (10) entfernen;
**c)** einen zweiten Behälter (120), welcher am Ausgang des ersten Behälters (300) und am Boden der Siebtrommel (12) angeordnet ist;
**d)** ein System (20, 18, 8, 7) für die kontinuierliche Zufuhr von Wasser in den ersten Behälter (300) derart, daß er dauerhaft überläuft, wobei das überschüssige Wasser (E) in dem zweiten Behälter (120) aufgefangen wird, nachdem es über die Siebtrommel (12) gelaufen ist;
**e)** einen Wasserdiffusor (15), welcher von dem Zufuhrsystem (20, 18, 8, 7) gespeist wird, und welcher an dem stromaufwärts gerichteten Ende des ersten Behälters (300) angeordnet ist, wobei dieser Diffusor (15) praktisch horizontale, zu dem stromabwärts liegenden Bereich des Behälters hin gerichtete Wasserstrahlen (I) erzeugt, welche dafür eingerichtet sind, die zu waschenden Produkte (L) schrittweise von dem stromaufwärts liegenden Bereich des Behälters, wo sie ausgekippt werden, zu dem stromabwärts gerichteten Ende (10) hin zu verschieben, und sie daraus zur gleichen Zeit wie das überlaufende Wasser auszuschütten, so daß sie sich auf der Wand der Siebtrommel (12) anordnen;
**f)** Röhren (40) zum Einblasen von Luft, welche im Inneren des ersten Behälters (300) angeordnet und dafür eingerichtet sind, in dem Wasser dieses ersten Behälters eine Vielzahl von Luftstrahlen (A) zu erzeugen, welche nach oben gerichtet sind, um ein Umrühren der Produkte (L) durchzuführen, welche von dem von dem Diffusor (15) erzeugten Wasserstrom transportiert werden;
**g)** Vorrichtungen zum Abnehmen (16, 26, 160, 260-261) und zum Auffangen (100) der Produkte (L), nachdem sie von der Trommel (12) auf eine Umlauffraktion gebracht worden sind;
und daß keine mechanische Transportvorrichtung noch ein Teil einer mechanischen Transportvorrichtung im Inneren des ersten Behälters (300) vorhanden ist, wobei die Verschiebung der Produkte (L) und ihr Auskippen aus diesem Behälter allein durch den von dem Diffusor (15) erzeugten überlaufenden Wasserstrom sichergestellt werden.

2. Vorrichtung gemäß Anspruch 1, dadurch gekennzeichnet, daß das System für die Wasserzufuhr (20, 18, 8, 14) im geschlossenen Kreislauf funktioniert, wobei das dem ersten Behälter (300) zugeführte Wasser in dem zweiten Behälter (120), eventuell nach Erwarmung oder Kühlung, wiedergewonnen wird.

3. Vorrichtung gemäß einem der Ansprüche 1 oder 2, dadurch gekennzeichnet, daß sie zusätzliche Röhren (90) zur Wasserverteilung in dem ersten Behälter aufweist, welche Strahlen (K) erzeugen, die zu der Erzeugung des Wasserstromes von stromaufwärts nach stromabwärts in diesem ersten Behälter (300) beitragen.

4. Vorrichtung gemäß einem der Ansprüche 1 bis 3, dadurch gekennzeichnet, daß sie in dem stromaufwärts liegenden Bereich des ersten Behälters (300) ein horizontales Gitter (33) mit Abstand von dem Boden (30) aufweist, über welchem die Produkte (L) umgerührt werden.

5. Vorrichtung gemäß Anspruch 4, dadurch gekennzeichnet, daß das Gitter (33) gelenkig angebrachte Fallklappen (330) besitzt.

6. Vorrichtung gemäß einem der Ansprüche 1 bis 5, dadurch gekennzeichnet, daß die Siebtrommel (12) an dem einen ihrer Enden von Umfangswalzen (11) getragen und in Drehung geführt wird.

7. Vorrichtung gemäß einem der Ansprüche 1 bis 6, dadurch gekennzeichnet, daß das obere Ende (10) des Bodens (32) des ersten Behälters aus einem horizontalen, nach außen umgeschlagenen Rand besteht, um mit der Wand der Siebtrommel (12) bündig abzuschließen.

8. Vorrichtung gemäß einem der Ansprüche 1 bis 7, dadurch gekennzeichnet, daß die Vorrichtungen zum Entfernen der Produkte von der Trommel (12) eine im Inneren der Trommel (12) positionierte Röhre (16) zur Verteilung einer Flüssigkeit aufweisen, welche Strahlen erzeugt, die dazu geeignet sind, die von der Trommel transportierten Produkte (L) nach außen zu drücken.

9. Vorrichtung gemäß einem der Ansprüche 1 bis 8, dadurch gekennzeichnet, daß die Abnehmvorrichtungen einen Schaber (26, 260) aufweisen, welcher dafür geeignet ist, die Pordukte (L) von der Trommel (12) abzulösen.

10. Vorrichtung gemäß einem der Ansprüche 1 bis 9, dadurch gekennzeichnet, daß am Boden jedes Behälters (300, 120) Öffnungen (21, 22) vorgesehen sind, welche die Entsorgung von Abfällen (D) und die Entleerung ermöglichen.

11. Vorrichtung gemäß einem der Ansprüche 1 bis 10, dadurch gekennzeichnet, daß sie drehende Bürsten (36, 37) aufweist, welche in dem stromabwärts liegenden Bereich des ersten Behälters (300) angeordnet sind.

12. Vorrichtung gemaß einem der Ansprüche 1 bis 11, dadurch gekennzeichnet, daß sie ein System mit Kamm (370) und Drehkreuz (37) aufweist, welches dafür eingerichtet ist, die in dem ersten Behälter (300) schwimmenden Abfälle einzufangen.

13. Vorrichtung gemäß einem der Ansprüche 1 bis 12, dadurch gekennzeichnet, daß sie ein in dem Inneren der Drehtrommel (12) angebrachtes Filtergitter (126) aufweist.

14. Anlage zum Waschen und/oder Desinfizieren von Produkten, welche mehrere Vorrichtungen gemäß einem der vorherigen Ansprüche aufweist, welche derart in einer Kaskade angeordnet sind, daß die gewaschenen Produkte, welche die Siebtrommel (12) einer der Vorrichtungen (P₁, P₂) verlassen, in den ersten Behälter (300) der nachfolgenden Vorrichtung (P₂, P₃) fallen, wobei diejenigen, welche die Trommel (12) der letzten Vorrichtung (P₃) verlassen, aufeine Aufnahme- und/oder Entsorgungsvorrichtung (100) fallen.
